## Europäisches Patentamt

## European Patent Office

## Office européen des brevets

(11) Veröffentlichungsnummer: **0 128 511**
**B1**

(12) **EUROPÄISCHE PATENTSCHRIFT**

(45) Veröffentlichungstag der Patentschrift:
08.04.87

(21) Anmeldenummer: **84106424.9**

(22) Anmeldetag: **05.06.84**

(51) Int. Cl.⁴: **G 06 F 1/00,** H 04 N 5/64,
F 16 M 11/10

(54) **Fernsehwiedergabegerät.**

(30) Priorität: **09.06.83 DE 8316941 U**

(43) Veröffentlichungstag der Anmeldung:
**19.12.84 Patentblatt 84/51**

(45) Bekanntmachung des Hinweises auf die Patenterteilung:
**08.04.87 Patentblatt 87/15**

(84) Benannte Vertragsstaaten:
**DE FR NL**

(56) Entgegenhaltungen:
**EP-A-0 041 804**
**EP-A-0 042 030**
**EP-A-0 070 337**
**GB-A-902 746**
**US-A-2 481 717**
**US-A-4 368 867**

**IBM TECHNICAL DISCLOSURE BULLETIN, Band 24,
Nr. 1A, Juni 1981, Seiten 186-187, New York, US;
L.H. LOWRIE u.a.: "Adjustable tilt mechanism for
data-entry terminal"
IDEM**

(73) Patentinhaber: **Siemens Aktiengesellschaft Berlin
und München, Wittelsbacherplatz 2, D-8000
München 2 (DE)**

(72) Erfinder: **Hudek, Anton, Ludwigstrasse 21, D-7515
Linkenheim (DE)**
Erfinder: **von Vietinghoff, Joachim, Belchenstrasse
16, D-7505 Ettlingen (DE)**

## Beschreibung

Die Erfindung betrifft ein Fernsehwiedergabegerät mit einem die Bildröhre enthaltenden Gehäuse, das in einer kreisbogenförmigen Führung, die in einem Sockel enthalten ist, um eine parallel zur Bildschirmebene verlaufende horizontale Achse neigbar gehaltert ist, wobei der Kreisradius der Führung so bemessen ist, daß die Neigungsachse etwa durch den Gehäuseschwerpunkt läuft. Ein derartiges Fernsehwiedergabegerät ist aus der EP-A-0 041 804 bekannt. Das Gehäuse ist dort mit einer Kugelfläche im Sockel neig und drehbar gelagert.

In der Firmendruckschrift "IBM Technical Disclosure Bulletin" Vol. 24, Nr. 1a, Juni 1981 ist ein einstellbarer Neigungsmechanismus für Datensichtgeräte beschrieben, der einen Sockel mit einer zylindrischen Ausnehmung aufweist. Eine entsprechende Zylinderfläche ist an der Unterseite des Sichtgerätes angebracht. Bei auf den Sockel aufgesetztem Sichtgerät liegen die beiden Zylinderflächen aneinander an, und das Sichtgerät kann nach vorn und hinten geneigt werden, wobei die Zylinderfläche des Sichtgerätes in der zylindrischen Ausnehmung des Sockels gleitet. In letzterer sind zwei Führungsschienen angebracht, die in Ausnehmungen der Zylinderfläche am Sichtgerät eingreifen. Diese Führungsschienen und Ausnehmungen dienen nur der seitlichen Führung; sie tragen weder das Fernsehwiedergabegerät noch sind sie so ausgebildet, daß sie das Abnehmen des Sichtgerätes vom Sockel verhindern. Hierzu ist eine gesonderte Sicherung vorgesehen. Da der Schwerpunkt des Sichtgerätes nicht senkrecht über oder unter dem Neigungsmittelpunkt liegt, ist in der zylindrischen Ausnehmung ein Reibungselement angebracht, welches das Sichtgerät in der jeweiligen Stellung hält. Die dadurch bedingte zusätzliche Reibungskraft ist beim Einstellen des Sichtgerätes zu überwinden, so daß ein leichtes Einstellen nicht gewährleistet ist.

Aus dem DE-GM 69 03 726 ist ein Fernsehempfangsgerät bekannt, dessen Bildröhre in einem Gehäuse untergebracht ist, das zwischen den Schenkeln eines U-förmig ausgebildeten, Schaltungsteile und Bedienelemente enthaltenden Standgestelles neigbar aufgehängt ist. Die Schenkel des Standgestelles umfassen zu einem großen Teil die Seitenwände des Gehäuses, so daß der Raumbedarf groß ist. Außerdem muß an dem Fernsehgerät eine gesonderte Aufhängevorrichtung angebracht werden.

Aus dem DE-GM 70 09 490 ist es bekannt, zwischen dem Bildröhrengehäuse eines Fernsehempfängers und einem feststehenden Gehäuse ein Kugelgelenk vorzusehen, das gestattet, Bildröhre und Gehäuse um eine senkrechte und um eine waagrechte Achse zu schwenken. Das Kugelgelenk besteht aus einer an der Unterseite des Bildröhrengehäuses angebrachten Kalotte, die in einer entsprechend angepaßten muldenförmigen Ausnehmung des Standgehäuses ruht. Die Reibung des Kugelgelenkes soll so bemessen sein, daß das Bildröhrengehäuse selbsttätig in jeder Stellung stehenbleibt.

Der vorliegenden Erfindung liegt die Aufgabe zugrunde, ein Fernsehsichtgerät zu schaffen, das um eine horizontale, zum Bildschirm parallele Achse geneigt werden kann, dessen Neigung leicht verstellbar ist und das keine besonderen Arretierungsmittel erfordert. Außerdem soll kein speziell angefertigtes Gehäuse erforderlich sein, sondern es soll ein übliches Gehäuse für feststehende Fernsehgeräte verwendet werden können.

Diese Aufgabe wird mit den in den kennzeichnenden Teilen der Ansprüche 1, 4 und 8 angegebenen Maßnahmen gelöst.

Die Führungen können verschiedenartig ausgebildet sein. In der Ausführungsform nach Anspruch 1 sind im Sockel zwei kreisbogenförmige Vertiefungen vorgesehen, in denen Kufen, die mit dem Gehäuse verbunden sind, gleitfähig gelagert sind. Nach Anspruch 4 bestehen die Führungen aus Schienen und Gleitstücken. In der Ausführungsform nach Anspruch 8 sind an der Unterseite des Gehäuses Bleche mit parallel zur Neigungsachse verlaufenden Stiften befestigt, die in kreisbogenförmige Schlitze im Sockel eingreifen. Die Vertiefungen und Kufen bzw. die Schlitze mit den Stiften dienen in diesem Falle nicht nur als Führungen, sondern auch als tragende Elemente für das Fernsehgerät. Es kann daher ein übliches Gehäuse mit Fußleisten verwendet werden, mit denen das Fernsehgerät auf die Kufen gestellt bzw. mit den Blechen verbunden wird.

Anhand der Zeichnungen werden im folgenden die Erfindung sowie Ausgestaltungen und Weiterbildungen näher beschrieben und erläutert.

Es zeigen

die Figuren 1 und 2 ein Ausführungsbeispiel, bei dem das Gehäuse eines Fernsehsichtgerätes auf kreisbogenförmige Kufen gesetzt ist, die in Vertiefungen eines Sockels sitzen,

Figur 3 ein Ausführungsbeispiel, bei dem die Kufen und Vertiefungen des Ausführungsbeispiels nach Figur 1 durch Schienen und Gleitstücke ersetzt sind,

die Figuren 4 und 5 ein Ausführungsbeispiel mit einer Führung durch Zapfen, die in kreisbogenförmige Schlitze eingreifen.

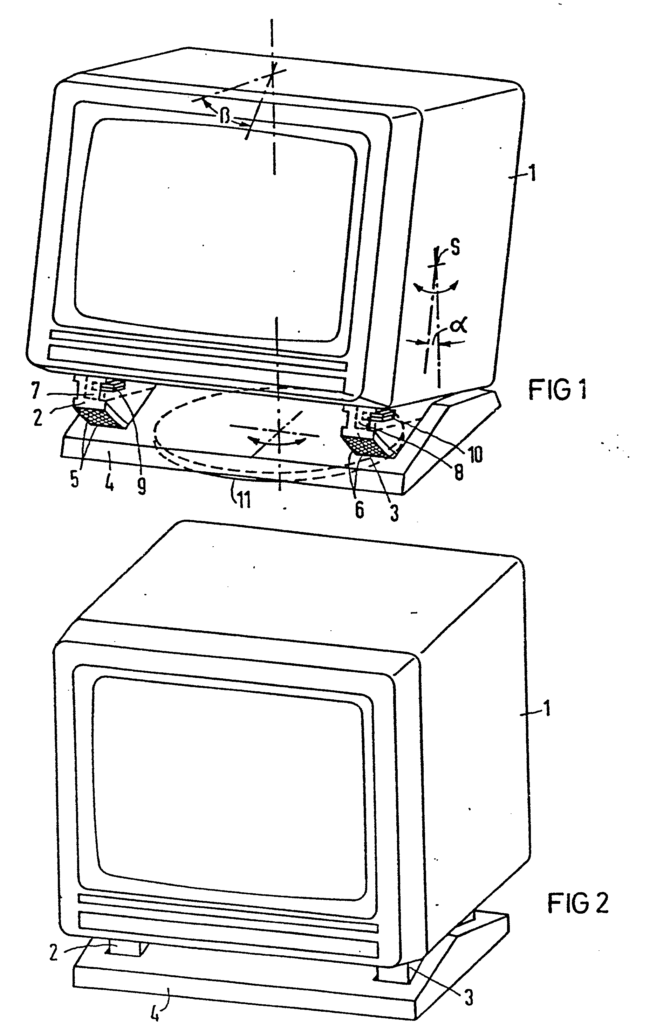

In Figur 1 ist mit 1 ein Fernsehwiedergabegerät bezeichnet, das so gehaltert sein soll, daß es um eine horizontale, zum Bildschirm parallele Achse geneigt werden kann. Hierzu sitzt es auf kreisbogenförmigen Kufen 2, 3, die in entsprechenden bogenförmigen Vertiefungen eines Sockels 4 gleitfähig gelagert sind. Der Kufenradius ist so gewählt, daß sich beim Verschieben der Kufen im Sockel das Gehäuse um eine Achse neigt, die in etwa durch den Gehäuseschwerpunkt läuft, damit das Gehäuse bei jeder Neigung sich in einer stabilen Lage befindet. Die Gleitflächen 5, 6 der Kufen und die des Sockels bestehen aus einem Material, welches einen Reibwert ergibt, der einerseits so klein ist, daß das Gehäuse leicht geneigt werden kann, andererseits aber doch so groß ist, daß seine Lage in jeder Stellung ausreichend stabil ist. Geeignete Materialien sind z. B. Kunststoff, wie selbstklebendes Polytetrafluoräthylen-Band oder Filz und Stahlband. Die Vertiefungen im Sockel 4 und die Kufen 5, 6 sind so geformt, daß sich die Kufen einhängen lassen. Ferner ist der Sockel 4 durch seinen dreieckförmigen Querschnitt bzw. durch dreieckförmige seitliche Wangen so gestaltet, daß, wenn das Gehäuse aufgesetzt ist, der Neigungswinkel begrenzt und damit die Kufen nicht mehr aus den Vertiefungen herausfallen können. Die Kufen 2, 3 sind ferner so ausgebildet, daß sich das Gehäuse mit seinen Fußleisten 7, 8 in die Kufen stellen läßt. Durch seitliche Federn 9, 10 wird es gegen Herausfallen gesichert. Der Sockel 4 mit dem Gehäuse 1 sitzt auf einem tellerartigen Fuß 11, der um eine vertikale Achse drehbar ist, die etwa durch die Gehäusemitte läuft. Das Gehäuse kann daher auch um diese vertikale Achse gedreht werden.

Während die Figur 1 das neue Fernsehsichtgerät in der Stellung zeigt, in der der Bildschirm am weitesten nach hinten geneigt ist, so daß die wesentlichen Teile sichtbar werden, ist in Figur 2 zur Veranschaulichung der Funktion der Neuerung das Sichtgerät mit nach vorn geneigtem Bildschirm dargestellt. Die Kufen 2, 3 sind in dieser Stellung weitgehend verdeckt.

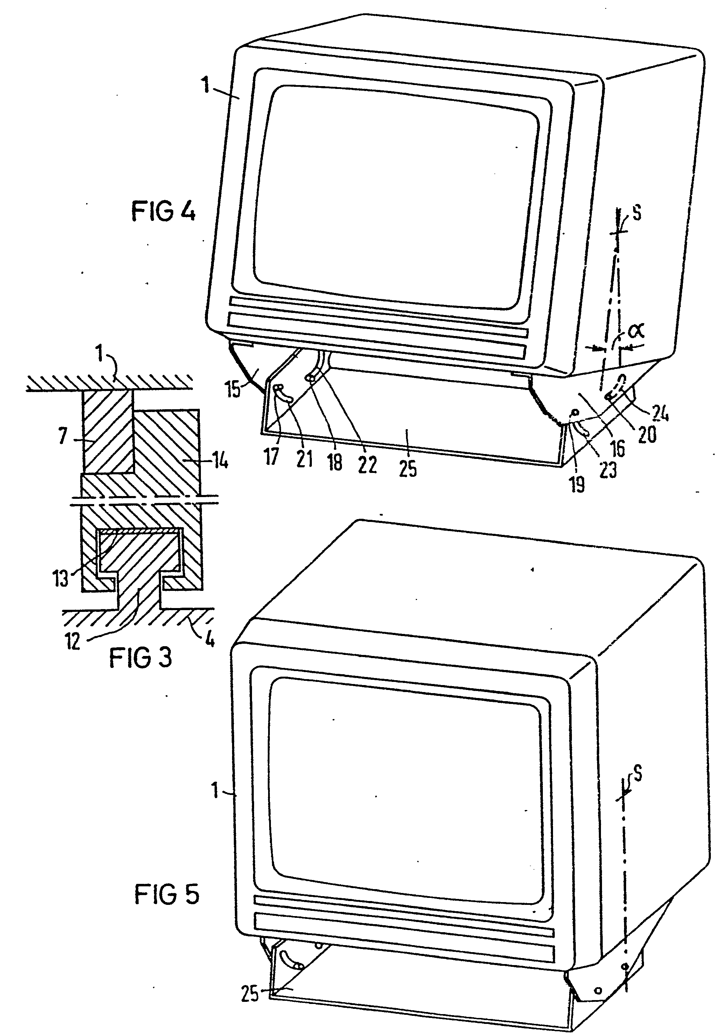

Anstelle von Kufen und Vertiefungen im Sockel können auch andere entsprechende Führungen verwendet werden. Figur 3 zeigt den Querschnitt eines Beispiels, bei dem auf dem Sockel 4 eine bogenförmige Schiene 12 angebracht ist, auf der ein Gleitstück 14, das entsprechend der Schiene 12 bogenförmig ist, gleitend gelagert ist. Zur Erzielung eines günstigen Reibwertes ist die Schiene 12 mit einer Polytetrafluoräthylen-Schicht 13 belegt. Auf dem Gleitstück 14 sitzt der Fuß 7 des Gehäuses 1. Die Schiene 12 hat einen T-förmigen Querschnitt und wird vom Gleitstück 14 so umfaßt, daß dieses in die Schiene eingehängt werden kann. Ist dem Sockel 4, wie im Ausführungsbeispiel nach den Figuren 1 und 2, eine geeignete Form gegeben, so kann das Gleitstück nach Aufsetzen des Gehäuses nicht mehr aus der Schiene herausfallen.

Ein Ausführungsbeispiel mit einer weiteren Führung für die Neigungsbewegung eines Sichtgerätes ist in den Figuren 4 und 5 dargestellt. Mit 1 ist wieder das Gehäuse des Fernsehwiedergabegerätes bezeichnet. An dessen Unterseite sind zwei Blechwinkel 15, 16 angeschraubt, an denen je zwei Stifte 17, 18 bzw. 19, 20 befestigt sind, die parallel zur Neigungsachse ausgerichtet sind. Sie greifen in bogenförmige Schlitze 21, 22 bzw. 23, 24 ein, die in einen aus gewinkeltem Blech 25 bestehenden Sockel eingearbeitet sind. Ihre Bogenradien, die nicht gleich zu sein brauchen, sind so bemessen, daß das Gehäuse um eine horizontale Achse geneigt werden kann, die in etwa durch den Schwerpunkt des Gehäuses läuft. Dieses wird daher um den Schwerpunkt gedreht und ist in jeder Neigungslage stabil. Zum Verringern der Reibung zwischen den Stiften und dem Blechsockel können auf die Stifte Rollen gesteckt sein. Die beim Stanzen durch Nippeln mit einem runden Locher entstehende Rauheit der Schlitzränder kann zur Vergrößerung des Reibmomentes herangezogen werden. Auch bei dieser Ausführungsform kann daher auf ein Arretiermechanismus verzichtet werden. Anstatt der abgebildeten Ausführungsform können die Stifte an den Winkelblechen 15, 16 nach außen gerichtet sein. Dementsprechend liegen die Winkelbleche innerhalb des Sockels 25.

**Patentansprüche**

1. Fernsehwiedergabegerät mit einem die Bildröhre enthaltenden Gehäuse, das in einer kreisbogenförmigen Führung, die in einem Sockel enthalten ist, um eine parallel zur Bildschirmebene verlaufende horizontale Achse neigbar gehaltert ist, wobei der Kreisradius der Führung so bemessen ist, daß die Neigungsachse etwa durch den Gehäuseschwerpunkt läuft, dadurch gekennzeichnet, daß der Sockel (4) zwei kreisbogenförmige Vertiefungen aufweist, in denen Kufen (2, 3), auf denen das Gehäuse (1) sitzt, gleitfähig gelagert sind.

2. Fernsehwiedergabegerät nach Anspruch 1, dadurch gekennzeichnet, daß der Querschnitt der Kufen (2, 3) zumindest teilweise T-förmig ist und die Vertiefungen seitliche Ansätze aufweisen, die in die Kufen eingreifen.

3. Fernsehwiedergabegerät nach Anspruch 2, dadurch gekennzeichnet, daß der Sockel (4) so ausgebildet ist, daß nach Aufsetzen des Gehäuses (1) auf die in die Vertiefungen eingehängten Kufen (2, 3) der Neigungswinkel begrenzt ist und die Kufen mit dem Gehäuse nicht aus den Vertiefungen herausnehmbar sind.

4. Fernsehwiedergabegerät mit einem die Bildröhre enthaltenden Gehäuse, das in einer kreisbogenförmigen Führung, die in einem Sockel enthalten ist, um eine parallel zur Bildschirmebene verlaufende horizontale Achse neigbar gehaltert ist, wobei der Kreisradius der Führung so bemessen ist, daß die Neigungsachse etwa durch den Gehäuseschwerpunkt läuft, dadurch gekennzeichnet, daß der Sockel (4) zwei kreisbogenförmige Schienen (12) aufweist, auf denen mit dem Gehäuse (1) verbundene Gleitstücke (14) beweglich gelagert sind.

5. Fernsehwiedergabegerät nach Anspruch 4, dadurch gekennzeichnet, daß der Querschnitt der Schienen (12) T-förmig ist und die Gleitstücke in die Schienen einhängbar sind.

6. Fernsehwiedergabegerät nach Anspruch 5, dadurch gekennzeichnet, daß der Sockel so ausgebildet ist, daß nach Aufsetzen des Gehäuses (1) auf die in den Schienen (12) eingehängten Gleitstücke (14) der Neigungswinkel so begrenzt ist, daß die Gleitstücke (14) mit dem Gehäuse nicht aus den Schienen herausnehmbar sind.

7. Fernsehwiedergabegerät nach einem der Ansprüche 1 bis 6, dadurch gekennzeichnet, daß das Gehäuse (1) zwei Fußleisten (7, 8) aufweist, die in an der Oberseite jeder Kufe (2, 3) vorhandene Nuten einsetzbar sind und daß in den Nuten seitliche Sicherungsfedern (9, 10) vorgesehen sind, die das Gehäuse (1) gegen Herausfallen sichern.

8. Fernsehwiedergabegerät mit einem die Bildröhre enthaltenden Gehäuse, das in einer kreisbogenförmigen Führung, die in einem Sockel enthalten ist, um eine parallel zur Bildschirmebene verlaufende horizontale Achse neigbar gehaltert ist, wobei der Kreisradius der Führung so bemessen ist, daß die Neigungsachse etwa durch den Gehäuseschwerpunkt läuft, dadurch gekennzeichnet, daß an der Unterseite des Gehäuses (1) Bleche (15, 16) mit parallel zur Neigungsachse verlaufenden Stiften (17, 18; 19, 20) befestigt sind, die in kreisbogenförmige Schlitze (21, 22; 23, 24) im Sockel (25) eingreifen bzw. am Sockel parallel zur Neigungsachse verlaufende Stifte befestigt sind, die in Schlitze eingreifen, die in an der Unterseite des Gehäuses angebrachten Blechen enthalten sind.

9. Fernsehwiedergabegerät nach Anspruch 8, dadurch gekennzeichnet, daß die Ränder der kreisbogenförmigen Schlitze rauh sind.

**Claims**

1. Television reproduction apparatus comprising a housing which contains the picture tube and which is secured in an arcuate guide arranged in a base so as to be tiltable about a horizontal axis extending parallel to the plane of the picture screen, where the circular radius of the guide is dimensioned to be such that the tilt axis approximately runs through the centre of gravity of the housing, characterised in that the base (4) has two arcuate recesses, wherein runners (2, 3), on which the housing (1) is placed, are arranged so as to be slidable.

2. Television reproduction apparatus as claimed in Claim 1, characterised in that the cross-section of the runners (2, 3) is at least partially T-shaped and the recesses have lateral attachments which engage into the runners.

3. Television reproduction apparatus as claimed in Claim 2, characterised in that the base (4) is designed to be such that when the housing (1) has been mounted onto the runners (2, 3) which are set into the recesses, the angle of tilt is limited and the runners together with the housing cannot be removed from the recesses.

4. Television reproduction apparatus having a housing which contains the picture tube and which is secured in an arcuate guide arranged in a base so as to be tiltable about a horizontal axis extending parallel to the plane of the picture screen, where the radius of the guide is dimensioned to be such that the tilt axis approximately runs through the centre of gravity of the housing, characterised in that the base (4) has two arcuate rails (12), on which sliding pieces (14) connected to the housing (1) are movably mounted.

5. Television reproduction apparatus as claimed in Claim 4, characterised in that the cross-section of the rails (12) is T-shaped and the sliding pieces can be set into the rails.

6. Television reproduction apparatus as claimed in Claim 5, characterised in that the base is designed to be such that when the housing (1) has been mounted onto the sliding pieces (14) set into the rails (12) the angle of tilt is restricted in such a manner that the sliding pieces (14) together with the housing cannot be removed from the rails.

7. Television reproduction apparatus as claimed in one of Claims 1 to 6, characterised in that the housing (1) has two base strips (7 8), which can be inserted into grooves arranged on the upper side of each runner (2, 3) and that safety springs (9, 10), which protect the housing (1) against falling out, are laterally arranged in the grooves.

8. Television reproduction apparatus having a housing which comprises the picture tube and which is secured in an arcuate guide contained in a base so as to be tiltable about a horizontal axis parallel to the plane of the picture screen, where the radius of the guide is dimensioned to be such that the axis of tilt approximately runs through the centre of gravity of the housing, characterised in that plates (15, 16) secured to the underside of the housing (1) engage arcuate slots in the base by means of pins (17, 18; 19, 20) extending parallel to the axis of tilt, or that slots which are arranged in plates secured to the underside of the housing are engaged by pins extending parallel to the axis of tilt, and secured to the base.

9. Television reproduction apparatus as claimed in Claim 8, characterised in that the edges of the arcuate slots are roughened.

**Revendications**

1. Appareil récepteur de télévision possédant un coffret, contenant le tube image, qui est supporté inclinable autour d'un axe horizontal parallèle au plan de l'écran dans un guide en arc de cercle, lui-même contenu dans un socle, le rayon de courbure du guide étant choisi de manière que l'axe d'inclinaison passe à peu près par le centre de gravité du coffret, caractérisé en ce que le socle (4) présente deux creux en arc de cercle dans lesquels sont montés coulissants des patins (2, 3) sur lesquels s'appuie le coffret (1).

2. Appareil selon la revendication 1, caractérisé en ce que la section droite des patins (2, 3) est au moins partiellement en forme de T et les creux presentent des rebords latéraux qui pénètrent dans les patins.

3. Appareil selon la revendication 2, caractérisé en ce que le socle (4) est conformé de manière qu'après la mise en place du coffret (1) sur les patins (2, 3), eux-mêmes accrochés dans les creux, l'angle d'inclinaison soit limité et les patins avec le coffret ne puissent pas être extraits des creux.

4. Appareil récepteur de télévision possédant un coffret, contenant le tube image, qui est supporté inclinable autour d'un axe horizontal parallèle au plan de l'écran dans un guide en arc de cercle, lui-même contenu dans un socle, le rayon de courbure du guide étant choisi de manière que l'axe d'inclinaison passe à peu près par le centre de gravité du coffret, caractérisé en ce que le socle (4) présente deux rails (12) en arc de cercle, sur lesquels sont disposés mobiles des coulisseaux (14) solidaires du coffret (1).

5. Appareil selon la revendication 4, caractérisé en ce que la section droite des rails (12) est en forme de T et les coulisseaux peuvent être accrochés dans les rails.

6. Appareil selon la revendication 5, caractérisé en ce que le socle est conformé de manière qu'après mise en place du coffret (1) sur les coulisseaux (14), eux-mêmes accrochés dans les rails (12), l'angle d'inclinaison soit limité de telle sorte que les coulisseaux (14) avec le coffret ne peuvent pas être extraits des rails.

7. Appareil selon une des revendications 1 à 6, caractérisé en ce que le coffret (1) présente deux réglettes d'appui (7, 8) qui peuvent être engagées dans des rainures ménagées dans le dessus de chaque patin (2, 3) et que les rainures contiennent des ressorts de verrouillage latéraux (9, 10 qui empêchent le coffret (1) de tomber des patins.

8. Appareil récepteur de télévision possédant un coffret, contenant le tube image, qui est supporté inclinable autour d'un axe horizontal parallèle au plan de l'écran dans un guide en arc de cercle, lui-même contenu dans un socle, le rayon de courbure du guide étant choisi de manière que l'axe d'inclinaison passe à peu près par le centre de gravité du coffret, caractérisé en ce que sur le dessous du coffret (1), sont fixées des tôles (15, 16) portant des tiges (17, 18; 19, 20) s'étendant parallèlement à l'axe d'inclinaison et pénétrant dans des fentes (21, 22; 23, 24) en arc de cercle du socle (25), ou que des tiges parallèles à l'axe d'inclinaison sont fixées au socle et pénètrent dans des tôles fixées sur le dessous du coffret.

9. Appareil selon la revendication 8, caractérisé en ce que les bords des fentes en arc de cercle sont rugueux.

0 128 511

FIG 1

FIG 2

0 128 511

FIG 4

FIG 3

FIG 5

3